# EUROPEAN PATENT APPLICATION

(11) **EP 4 776 047 A1**
(43) Date of publication of application: **15.07.2026**
(21) Application number: 24862526.1
(22) Date of filing: 09.08.2024
(51) Int. Cl.: G02B 21/00, G01N 21/27

(54) **OPTICAL SYSTEM FOR BIOLOGICAL SAMPLE OBSERVATION, MEASUREMENT DEVICE, MEASUREMENT METHOD, AND ANALYSIS PROGRAM**

(30) Priority: 05.09.2023 JP 2023143555
(71) Applicant: Sony Group Corporation, Tokyo 108-0075 (JP)
(72) Inventor: OKAMOTO Yoshiki, Tokyo 108-0075 (JP)
(74) Representative: D Young & Co LLP
(86) International application number: PCT/JP2024/028717
(87) International publication number: WO 2025/052872

(57) **Abstract**

It is desirable that an optical system such as an optical system for observing a biological sample for measuring an object to be measured has a more compact configuration. Therefore, an object of the present technology is to provide an optical system having a more compact configuration.

As a result of intensive studies, the present inventors have found that an optical system including a condensing optical system, a reflection mirror unit disposed on a side opposite to the condensing optical system across an object to be measured, and a light source that irradiates the object to be measured with light can change an optical path length between specific elements and easily focus even with a compact configuration.

## Description

### TECHNICAL FIELD

The present technology relates to an optical system for observing a biological sample, a measurement device, a measurement method, and an analysis program. More specifically, the present technology relates to an optical system for observing a biological sample including a condensing optical system, a reflection mirror unit disposed on an opposite side across an object to be measured, and a light source that irradiates the object to be measured with light.

### BACKGROUND ART

Conventionally, there has been known an optical system for observing a biological sample in which an optical path length from an object to be measured to an image forming plane is changed by changing a position of an optical element, and focusing is performed.

For example, Non-Patent Document 1 described below discloses an optical system for observing a biological sample that generates an intermediate image (primary image forming plane) and finally forms an image via a reflection mirror of an optical element disposed on the image forming plane of the intermediate image.

### CITATION LIST

### NON-PATENT DOCUMENT

Non-Patent Document 1: Remote-focusing microscopy With long working distance objective lenses/1 June 2014/Vol.53,No.16/APPLIED OPTICS

### SUMMARY OF THE INVENTION

### PROBLEMS TO BE SOLVED BY THE INVENTION

It is desirable that an optical system such as an optical system for observing a biological sample for measuring an object to be measured has a more compact configuration.

Therefore, an object of the present technology is to provide an optical system having a more compact configuration.

### SOLUTIONS TO PROBLEMS

As a result of intensive studies, the present inventors have found that an optical system including a condensing optical system and a reflection mirror unit disposed on a side opposite to the condensing optical system across an object to be measured can change an optical path length between specific elements and easily focus even in a compact configuration.

That is, the present technology provides an optical system for observing a biological sample, the optical system including a condensing optical system, a reflection mirror unit, and, in which the condensing optical system and the reflection mirror unit are disposed on opposite sides across the object to be measured, and the reflection mirror unit includes a reflection mirror and a position adjustment system that adjusts a distance between the reflection mirror and the object to be measured by moving the reflection mirror.

Movement of the reflection mirror by the position adjustment system may be performed by converting an electric signal into a physical motion. The optical system for observing a biological sample of the present technology may further include a light source that irradiates the object to be measured with light, and may further include a detection section.

In the optical system for observing a biological sample of the present technology, the condensing optical system may include at least an objective lens and an image forming lens.

In the optical system for observing a biological sample of the present technology, the object to be measured preferably has a light transmittance of not 0%.

The optical system for observing a biological sample of the present technology may include two or more of the light sources, and the two or more light sources may emit light of different wavelengths.

In the optical system for observing a biological sample of the present technology, the object to be measured may include a sample injected into a cell, and the cell may include a flow cell including a flow channel for measurement or may include a microscope slide. In this case, an optical path length from the condensing optical system to the object to be measured may periodically vary by making a movement of the reflection mirror by the position adjustment system a periodic movement, and a moving width of the periodic movement may be the same as an inner dimension of the cell in an optical axis direction.

Moreover, the present technology provides a measurement device including the optical system for observing a biological sample according to the present technology.

Next, the present technology provides a measurement method for an object to be measured, the measurement method including: using a condensing optical system and a reflection mirror unit including a reflection mirror and a position adjustment system, disposing the condensing optical system and the reflection mirror unit on opposite sides across the object to be measured, and adjusting a distance between the reflection mirror and the object to be measured using the position adjustment system.

In the measurement method of the present technology, the straight line may be orthogonal to an optical axis of the condensing optical system. Moreover, the present technology provides an analysis program for, using measurement data acquired by the measurement method according to the present technology, constructing three-dimensional data of the object to be measured.

### BRIEF DESCRIPTION OF DRAWINGS

Fig. 1 illustrates a configuration example of an optical system according to a first embodiment.
Fig. 2 illustrates a configuration example of an optical system according to the related art.
Fig. 3 illustrates a configuration example of an optical system according to a second embodiment.
Fig. 4 is an enlarged view of the vicinity of an object to be measured of a microparticle analyzer including an optical system according to the present technology, and is an example in a case where a reflection mirror is periodically moved.
Fig. 5 is an enlarged view of the vicinity of an object to be measured of the microparticle analyzer including the optical system according to the present technology, and is a modification in a case where the reflection mirror is periodically moved.
Fig. 6 illustrates an example of an optical system including two or more light sources.
Fig. 7 is an example of a method of irradiating an object to be measured with light from a light source in the optical system according to the present technology.
Fig. 8 illustrates a modification of a method of irradiating an object to be measured with light from a light source in the optical system according to the present technology.
Fig. 9 illustrates an example of an embodiment in which an optical path length from a light source to an irradiation point is changed in the optical system of the present technology.
Fig. 10 is a diagram schematically illustrating an example of an overall configuration of the optical system according to the present technology.
Fig. 11 is a diagram schematically illustrating a modification of an overall configuration of the optical system according to the present technology.
Fig. 12 is a diagram schematically illustrating an overall configuration of a microscope system.
Fig. 13 is a diagram schematically illustrating an overall configuration of a microscope system including the optical system according to the present technology.
Fig. 14 is a diagram illustrating an example of an imaging method.
Fig. 15 is a diagram illustrating an example of an imaging method.
Fig. 16 is a diagram schematically illustrating an overall configuration of a biological sample analyzer.

### MODE FOR CARRYING OUT THE INVENTION

Preferred embodiments of the present technology will be described below. However, the following embodiments illustrate examples of representative embodiments of the present technology, and the present technology is not limited to the following preferred embodiments, and can be freely changed within the scope of the present technology.

### [Optical System]

An optical system according to the present technology includes a condensing optical system, a reflection mirror unit disposed on an opposite side across an object to be measured, and a light source that irradiates the object to be measured with light. By disposing the reflection mirror unit on the opposite side of the condensing optical system across the object to be measured, the optical system can have a compact configuration as compared with a case where the object to be measured is outside the optical system. Moreover, in the optical system, since the reflection mirror is disposed at a position different from the condensing optical system, the reflection mirror can be moved independently of the condensing optical system. That is, by moving the reflection mirror independently of the condensing optical system or the light source, a distance between the reflection mirror and the object to be measured or a distance between the reflection mirror and the light source can be easily adjusted, and an optical path length from the object to be measured to the condensing plane (image forming plane) or from the light source to the irradiation point can be changed to focus on the object to be measured or to focus the irradiation point on the object to be measured. Therefore, even in a compact configuration, the object to be measured can be suitably measured even in a case where the position of the object to be measured is not substantially fixed, such as a sample injected into the cell as the object to be measured.

Here, the "condensing plane" refers to a plane on which light is condensed by an optical element to focus the light, and the "image forming plane" refers to a plane on which light is condensed to form an image.

In the optical system according to the present technology, the reflection mirror is moved to perform focusing. Since the configuration of the reflection mirror is lightweight as compared with the case of focusing by moving the flow cell or the objective lens, the movement can be performed at high speed. Therefore, it is possible to focus at high speed even with a compact configuration as compared with the conventional optical system.

In the optical system according to the present technology, manual focus that is manually performed can be adopted for adjustment of the distance between the reflection mirror and the object to be measured, but autofocus that detects the position of the object to be measured and automatically sets the optimum focus can be suitably adopted. Furthermore, in the optical system according to the present technology, since the distance between the reflection mirror and the object to be measured can be easily adjusted, for example, focusing on the object to be measured can be performed at high speed by moving the reflection mirror at high speed, and further, the optical system may be combined with autofocus.

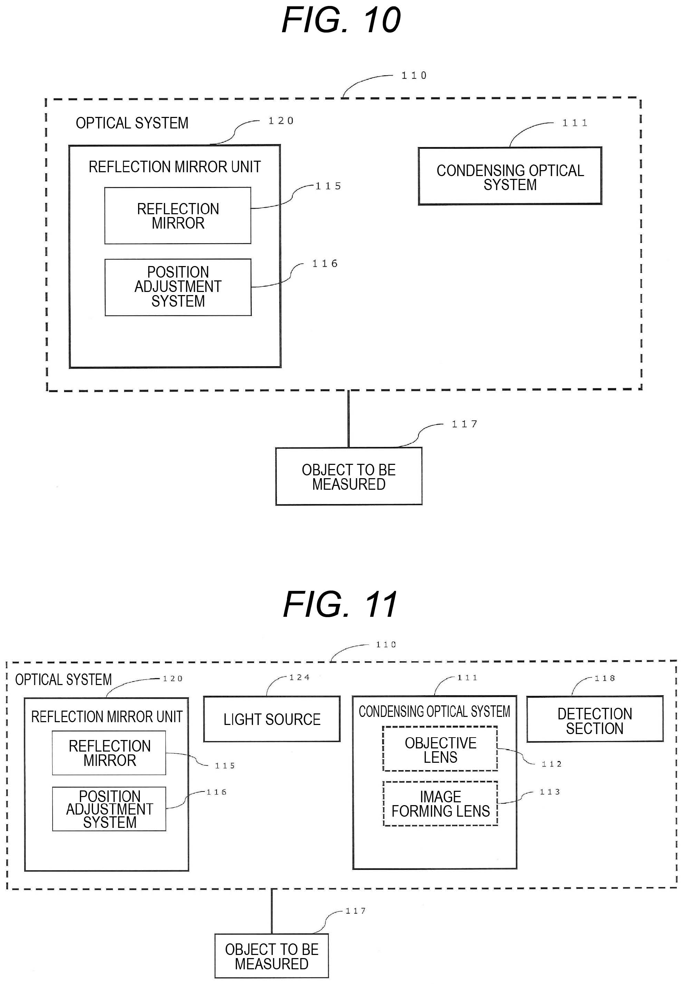

Fig. 10 is a schematic diagram of an optical system illustrated in an essential configuration as an example of an essential overall configuration of the optical system of the present technology. As an essential configuration, an optical system 110 of the present technology includes a reflection mirror unit 120 including a reflection mirror 115 and a position adjustment system 116, and a condensing optical system 111. As described above, the optical system 110 can suitably measure an object to be measured 117 even with a compact configuration due to the arrangement of these configurations.

Fig. 11 is a schematic diagram of an optical system further including a light source 124 and a detection section 118 in addition to the example illustrated in Fig. 10 as a modification of the optical system of the present technology. The condensing optical system 111 included in the optical system 110 may include an objective lens 112 and an image forming lens 113.

Moreover, the optical system according to the present technology can be adopted as a measurement device such as a microscope system integrally incorporating the optical system as a finished product, but can also be applied to a measurement device as an optional part of the measurement device, for example, since a compact configuration can be realized.

The measurement device to which the optical system according to the present technology can be applied as a finished product or an optional part is not particularly limited, and examples thereof include a flow cytometer and a microscope system used for analyzing microparticles such as cells.

### <Reflection Mirror Unit>

A reflection mirror unit included in an optical system according to the present technology includes a reflection mirror and a position adjustment system that adjusts a distance between the reflection mirror and the object to be measured by moving the reflection mirror.

The reflection mirror is an optical element that reflects all or at least a part of light incident on a reflection plane of the reflection mirror and changes a traveling direction of the light in a reverse direction.

The position adjustment system is a mechanism that adjusts a distance between the reflection mirror and the object to be measured by moving the reflection mirror. Examples of the moving mechanism of the reflection mirror by the position adjustment system that can be used in the present technology include a mechanism that converts an electric signal into a physical motion. Specific examples of the mechanism that converts an electric signal into a physical motion include a voice coil motor and a piezo element. Moreover, a line sensor or the like may be provided to control a movement range of the reflection mirror.

The reflection mirror unit included in the optical system according to the present technology moves the reflection mirror along an optical axis by the above-described position adjustment system. Here, the "optical axis" refers to a straight line passing through a central axis of the optical element constituting the optical system.

Since the reflection mirror moves along the optical axis, the optical axis and a straight line passing through a central axis of the reflection mirror do not deviate from each other. Therefore, a distance between the reflection mirror and the object to be measured can be adjusted, and an optical path length from the object to be measured to the image forming plane can be suitably changed.

Moreover, in the optical system according to the present technology, the movement along the optical axis of the reflection mirror by the above-described position adjustment system may be set as periodic movement. The optical path length from the condensing optical system to the object to be measured periodically varies with the periodic movement, so that the object to be measured is focused at any point on the movement line of the reflection mirror. Moreover, by combining this periodic movement and the above-described high-speed movement of the reflection mirror, high-speed autofocus can be suitably realized.

### <Object To Be Measured>

In the optical system according to the present technology, the condensing optical system and the reflection mirror unit are disposed on opposite sides across the object to be measured. Therefore, the light from the object to be measured is incident on the reflection plane of the reflection mirror, then reflected and incident on the condensing optical system. At this time, since at least a part of the reflected light is applied to the object to be measured, in order to cause light to be incident on the condensing optical system, it is preferable that the object to be measured has the transmittance of light that is not 0% over the entire incident plane of the light to the object to be measured. More specifically, it can be suitably used for observation of translucent biological samples such as cells, translucent microparticles, and the like.

The optical system according to the present technology is not particularly limited as long as the transmittance of light over the entire incident plane of light on the object to be measured that can be suitably measured is higher than 0%.

The optical system according to the present technology can suitably perform measurement even in a case where the position of the object to be measured is not substantially fixed, such as a sample injected into a cell as the object to be measured.

Here, the "cell" refers to a holder for holding an object to be measured, and examples thereof include a microscope slide having a disposition section capable of disposing the object to be measured together with a dispersion medium, a static cell having a container for measurement, and a flow cell including a flow channel for measurement.

In the optical system according to the present technology, a biological sample such as cells (including free cells such as microorganisms) that can move in the flow channel in the flow cell, microparticles such as fluorescent beads, biologically derived particles (including cells and secretions from cells) contained in gel particles, a cell sample embedded in a microscope slide such as a pathological slide, and the like can also be suitably measured as a sample related to the object to be measured. Therefore, the optical system according to the present technology can be preferably used as an optical system for microparticle measurement, and more preferably as an optical system for biological sample measurement.

In this case, by making a moving width when the reflection mirror moves along the optical axis the same as the thickness in the optical axis direction of the cell, it is possible to focus on a sample present at an arbitrary position in the optical axis direction in the cell. Note that, in a case where the cell is a flow cell including a flow channel for measurement, the moving width when the reflection mirror moves along the optical axis is the same as the width in the optical axis direction of the flow channel for measurement in which the sample can be present.

Furthermore, by making the movement along the optical axis of the reflection mirror by the position adjustment system a periodic movement, the optical path length from the condensing optical system to the object to be measured periodically varies, and the sample present at an arbitrary position in the optical axis direction in the cell is focused at any point on the movement line of the reflection mirror.

Moreover, by making the moving width of the periodic movement the same as an inner dimension of the cell in an optical axis direction, the sample existing at an arbitrary position in the optical axis direction in the cell is automatically focused at any position in the movement path of the periodic movement. Therefore, autofocus can be suitably realized.

Here, the inner dimension of the cell in the optical axis direction is an inner dimension along the optical axis direction of the cell. Specifically, in a case where a cell such as a flow cell is disposed in a direction perpendicular to the optical axis, the inner dimension along the optical axis direction coincides with the inner diameter of the circular shape in a case where the cross-sectional shape of the flow channel of the flow cell is circular, and coincides with the inner dimension or the like of the cross section along the optical axis direction in a case where the cross-sectional shape of the flow channel of the flow cell is a polygonal shape such as a quadrangle. Furthermore, in a case where the microscope slide or the like is disposed in the direction perpendicular to the optical axis, the inner dimension of the cell in the optical axis direction is the inner dimension of the cross section along the optical axis direction of the region where the dispersion medium dispersing the object to be measured is present.

On the other hand, if a cell such as a flow cell is disposed so as to be inclined with respect to the optical axis rather than perpendicular, the inner dimension along the optical axis direction is larger than the inner dimension of the cross section of the flow channel of the flow cell.

In addition, in a case where the object to be measured is a sample injected into a cell, the object to be measured is moved on a straight line that does not match the optical axis of the condensing optical system, and the object to be measured is measured twice or more during the movement, whereby three-dimensional imaging of the object to be measured can be realized on the basis of the measurement result. In this case, in a case where the straight line is a straight line orthogonal to the optical axis of the condensing optical system, the object to be measured moves on the straight line orthogonal to the optical axis, so that three-dimensional data can be efficiently processed from the measurement result of the object to be measured.

In the optical system disclosed in the present technology, since the reflection mirror can be moved at high speed, the number of measurements per unit time can be increased, and three-dimensional imaging with higher resolution can be performed. Furthermore, it is also possible to observe the object to be measured by freely changing the focus while moving the reflection mirror at a high speed. Moreover, by freely changing the focus while moving the reflection mirror at a high speed, it is also possible to observe the object to be measured overlapping in the optical axis direction.

Therefore, for example, in a case where the object to be measured is a cell contained in the gel, the characteristics (presence or absence of cells in gel, cell shape) and the like of the cell in the gel can be measured by taking three-dimensional imaging.

Furthermore, in a case where the object to be measured is moved on a straight line that does not coincide with the optical axis of the condensing optical system and the object to be measured is measured twice or more during the movement, the measurement may be performed twice or more while temporarily stopping the moving object to be measured at a place where the object to be measured is measured, or the measurement may be performed twice or more without stopping the object to be measured.

In a case where the cell is a flow cell including a flow channel for measurement, measurement can be performed without stopping the object to be measured. In this case, by making the moving speed of the reflection mirror sufficiently faster than the flow speed of the sample (object to be measured) moving through the flow channel, the object to be measured can be measured twice or more during the movement of the object to be measured, and three-dimensional imaging of the object to be measured on the basis of the measurement result can be realized.

The movement path of the periodic movement of the reflection mirror along the optical axis by the position adjustment system is not particularly limited, and can have any waveform shape, for example. As the waveform shape, for example, any shape such as a sine wave shape or a triangular wave shape can be adopted. In the present technology, the optical path length from the condensing optical system to the object to be measured can be periodically varied using these arbitrary movement paths designed by a combination of an AC motor and a control system.

### <Condensing Optical System>

The condensing optical system used in the optical system according to the present technology is not particularly limited as long as it is an optical system capable of condensing light from the object to be measured and forming an image. Examples of the condensing optical system include a system including one lens, a system including two optical elements such as a combination of an objective lens and an image forming lens, and a system combining three or more optical elements having one or more intermediate lenses in addition to the objective lens and the image forming lens. In the present technology, an arbitrary system can be selected according to the characteristics of the object to be measured and the purpose of measurement.

Here, the intermediate lens refers to a lens disposed between the objective lens and the image forming lens, has a function of adjusting the viewing angle, magnification, focal length, and the like of the condensing optical system, and a plurality of intermediate lenses may be used according to the purpose of use of the condensing optical system.

In the condensing optical system used in the optical system according to the present technology, it is preferable to use a system obtained by combining a plurality of optical elements including at least an objective lens and an image forming lens from the viewpoint of adjusting the magnification and the viewing angle to obtain an image with high resolution. Furthermore, as the condensing optical system used in the optical system according to the present technology, an optical section of a microscope system to be described later can also be suitably used.

### <Light Source>

The light source used in the optical system according to the present technology is not particularly limited as long as it can irradiate the object to be measured with light, and for example, a halogen lamp, a light emitting diode (LED), a continuous wave laser, an ultrashort pulse laser, or the like can be suitably used. Furthermore, it can be expected that the measurement of the object to be measured is suitably performed by using the line illumination as the light source and selectively irradiating the region of the focal point of the optical system with light. Furthermore, as a light source that can be used in the optical system according to the present technology, a light source that can be used in a light irradiation section of a microscope system to be described later and a light source section that can be used as a detection section of a microparticle analyzer for a biological material to be described later can also be suitably used.

Here, the "line illumination" refers to an illumination method in which the irradiation range is controlled to have a linear or curved shape, and can be realized, for example, by a method in which the shape of the light source to be used is set to the shape of the target irradiation range.

The number of light sources used in the optical system according to the present technology may be two or more. In this case, two or more light sources emit light of different wavelengths, so that the effect of the known measurement method using two or more light sources can be realized also in the present technology. For example, multicolor imaging in which two or more components and structures constituting the object to be measured are observed in different colors, and analysis of characteristics of light absorption and light scattering of the object to be measured for each wavelength allow evaluation of the composition, structure, and chemical characteristics of the object to be measured to be suitably realized also in the present technology.

As the wavelength used by the light source used in the optical system according to the present technology, any wavelength can be used. However, in a case where a fluorescent dye is used for observation of a sample, it is preferable to select a wavelength corresponding to excitation light of the fluorescent dye to be used.

Furthermore, in a case where the optical system according to the present technology includes two or more light sources, it is possible to adopt a form in which the reflection mirror unit includes two or more reflection mirrors, but even if the number of reflection mirrors is one, it is possible to suitably focus on the object to be measured. From the viewpoint of making the structure compact, even in a case where the optical system according to the present technology includes two or more light sources, it is preferable that one reflection mirror is included in the reflection mirror unit.

Moreover, in a case where the optical system according to the present technology includes two or more light sources, the number of irradiation points of light from the respective light sources may be two or more in accordance with the number of light sources, but light from the two or more light sources may be irradiated with light focused on the same focal point. In particular, from the viewpoint of multicolor imaging in which two or more components and structures constituting the object to be measured are observed in different colors and analyzing characteristics of light absorption and light scattering of the object to be measured for each wavelength, in a case where the optical system according to the present technology includes two or more light sources, it is preferable that light from the two or more light sources is irradiated with the light focused on the same focal point, and irradiation points of light from the respective light sources coincide with each other.

In the optical system according to the present technology, the method of irradiating the object to be measured with light from the light source is not particularly limited, but for example, any one of the following methods (1) to (3) can be suitably used in accordance with the characteristics of the object to be measured and the purpose of measurement.
(1) Method of directly irradiating an object to be measured with light from a direction different from an optical axis
(2) Method of indirectly irradiating an object to be measured with light from a direction different from an optical axis using a beam splitter or the like
(3) Method of irradiating an object to be measured with light along an optical axis from a direction of a reflection mirror unit

In the optical system according to the present technology, in a case where a method of directly irradiating the object to be measured with light from a direction different from the optical axis of (1) is adopted as a method of irradiating the object to be measured with light from the light source, line illumination can be suitably realized.

In the case of adopting a method of indirectly irradiating the object to be measured with light from a direction different from the optical axis using the beam splitter or the like of (2) or a method of irradiating the object to be measured with light along the optical axis from a direction of the reflection mirror unit of (3), bright-field illumination and epi-illumination can also be supported. Therefore, the optical system of the present technology can suitably irradiate the object to be measured with light even in a normal microscope system or a scanning microscope such as a laser scanning microscope or a confocal microscope.

The light source used in the optical system according to the present technology may further include a beam shaping system. By providing the beam shaping system, the condensing degree and the shape of the light output from the light source can be suitably adjusted. The beam shaping system is configured by combining arbitrary optical elements such as a lens and an optical filter according to the characteristics of the object to be measured and the purpose of measurement, and thus, can suitably control light applied to the object to be measured.

### <Detection Section>

The optical system according to the present technology may further include a detection section. Here, the "detection section" refers to an optical sensor that detects light irradiated onto the detection section. As an example of the detection section, for example, a photo multiplier tube (PMT), a photodiode, a charge coupled device (CCD), a complementary metal oxide semiconductor (CMOS), or the like can be suitably used.

The detection section may include other optical elements as necessary in addition to the condenser lens and the detector. The detection section may further include, for example, a spectroscopic section. Examples of optical components constituting the spectroscopic section may include a grating, a prism, and an optical filter, for example. The spectroscopic section can detect, for example, light having a wavelength that should be detected separately from light having another wavelength. The detection section may convert the detected light into an analog electrical signal by photoelectric conversion. The detection section can further convert the analog electric signal into a digital electric signal by AD conversion.

In the optical system according to the present technology, the detection section is disposed on the image forming plane of the optical system of the present technology, so that an image relating to the object to be measured can be suitably detected and acquired as measurement data. As the detection section that can be used in the optical system according to the present technology, a section that can be used as a signal acquisition section of a microscope system to be described later and a detection section that can be used as a section of a microparticle analyzer such as biological material to be described later can also be suitably used.

### <Other Configurations>

The optical system according to the present technology may include other configurations other than the above-described configurations as necessary as long as desired various physical properties are not significantly impaired.

### <Measurement Device>

The optical system according to the present technology can suitably measure the object to be measured with a compact configuration even in the case of measuring the object to be measured in which the position of the object to be measured is not substantially fixed, such as a sample injected into a cell as the object to be measured. Therefore, the optical system can also be suitably employed in, for example, a measurement device that measures the object to be measured in a state in which the position of the sample (object to be measured) is not substantially fixed, such as a flow cytometer (including a microparticle analyzer (cell analyzer), a microparticle sorting device (cell sorter), or the like) including a flow cell including a flow channel for measurement. As a form of the measurement device provided with the present technology, an optical system according to the present technology may be integrally incorporated as a finished product, or an optical system according to the present technology may be incorporated as an optional component so as to be separable from the finished product.

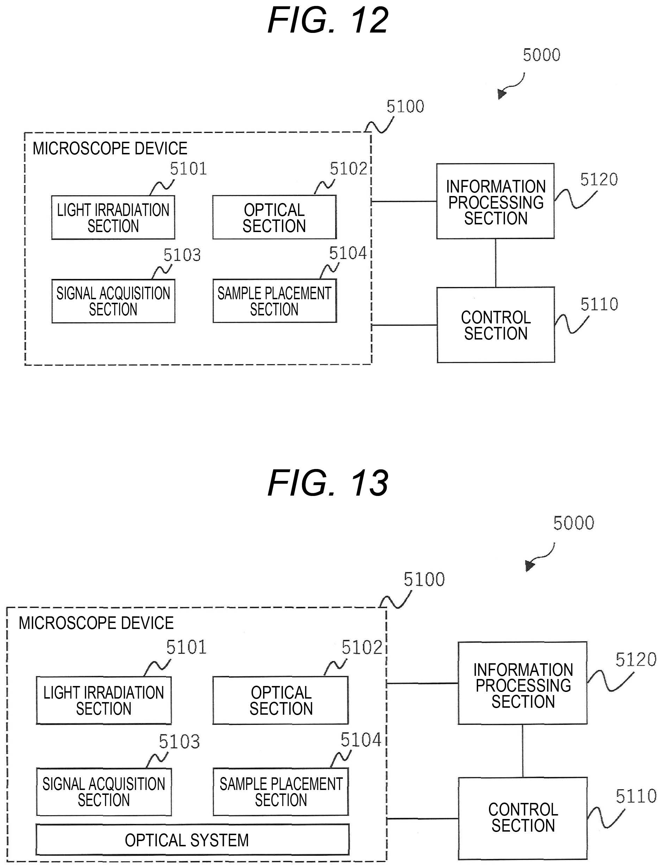

A microscope system that can include the optical system according to the present technology and an example in which the optical system according to the present technology is used in the microscope system will be described more specifically with reference to Figs. 12 to 15. Note that, in the optical system of the present technology, the configuration of the microscope system having a function overlapping with the configuration of the optical system of the present technology can also be suitably used as the configuration of the optical system of the present technology.

A configuration example of the microscope system of the present disclosure is illustrated in Fig. 12. A microscope system 5000 illustrated in Fig. 12 includes a microscope device 5100, a control section 5110, and an information processing section 5120. The microscope device 5100 includes a light irradiation section 5101, an optical section 5102, and a signal acquisition section 5103. The microscope device 5100 may further include a sample placement section 5104 on which a biological sample S is placed. Note that the configuration of the microscope device is not limited to that illustrated in Fig. 12, and for example, the light irradiation section 5101 may exist outside the microscope device 5100, and for example, a light source not included in the microscope device 5100 may be used as the light irradiation section 5101. Alternatively, the light irradiation section 5101 may be disposed so that the sample placement section 5104 is sandwiched between the light irradiation section 5101 and the optical section 5102, and may be disposed on the side at which the optical section 5102 exists, for example. The microscope device 5100 may be designed to be capable of performing one or more of the following: bright-field observation, phase contrast observation, differential interference contrast observation, polarization observation, fluorescent observation, and darkfield observation.

The microscope system 5000 may be designed as a so-called whole slide imaging (WSI) system or a digital pathology imaging system, and can be used for pathological diagnosis. Alternatively, the microscope system 5000 may be designed as a fluorescence imaging system, or particularly, as a multiple fluorescence imaging system.

For example, the microscope system 5000 may be used to make an intraoperative pathological diagnosis or a telepathological diagnosis. In the intraoperative pathological diagnosis, the microscope device 5100 can acquire the data of the biological sample S acquired from the subject of the operation while the operation is being performed, and then transmit the data to the information processing section 5120. In the telepathological diagnosis, the microscope device 5100 can transmit the acquired data of the biological sample S to the information processing section 5120 located in a place away from the microscope device 5100 (such as in another room or building). In these diagnoses, the information processing section 5120 then receives and outputs the data. On the basis of the output data, the user of the information processing section 5120 can make a pathological diagnosis.

### (Biological Sample)

The biological sample S may be a sample containing a biological component. The biological component may be a tissue, a cell, a liquid component of the living body (blood, urine, or the like), a culture, or a living cell (a myocardial cell, a nerve cell, a fertilized egg, or the like).

The biological sample may be a solid, or may be a specimen fixed with a fixing reagent such as paraffin or a solid formed by freezing. The biological sample can be a section of the solid. A specific example of the biological sample may be a section of a biopsy sample.

The biological sample may be one that has been subjected to a treatment such as staining or labeling. The treatment may be staining for indicating the morphology of the biological component or for indicating the substance (surface antigen or the like) contained in the biological component, and can be hematoxylin-eosin (HE) staining or immunohistochemistry staining, for example. The biological sample may be one that has been subjected to the above treatment with one or more reagents, and the reagent(s) can be a fluorescent dye, a coloring reagent, a fluorescent protein, or a fluorescence-labeled antibody.

The specimen may be prepared from a tissue sample for the purpose of pathological diagnosis or clinical examination. Alternatively, the specimen is not necessarily of the human body, and may be derived from an animal, a plant, or some other material. The specimen may differ in property, depending on the type of the tissue being used (such as an organ or a cell, for example), the type of the disease being examined, the attributes of the subject (such as age, gender, blood type, and race, for example), or the subject's daily habits (such as an eating habit, an exercise habit, and a smoking habit, for example). The specimen may be accompanied by identification information (bar code, QR code (registered trademark), or the like) for identifying each specimen, and be managed in accordance with the identification information.

### (Light irradiation section)

The light irradiation section 5101 is a light source for illuminating the biological sample S, and is an optical section that guides light emitted from the light source to a specimen. The light source can illuminate a biological sample with visible light, ultraviolet light, infrared light, or a combination thereof. The light source may be one or more of the following: a halogen light source, a laser light source, an LED light source, a mercury light source, and a xenon light source. The light source in fluorescent observation may be of a plurality of types and/or wavelengths, and the types and the wavelengths may be appropriately selected by a person skilled in the art. The light irradiation section may have a configuration of a transmissive type, a reflective type, or an epi-illumination type (a coaxial epi-illumination type or a side-illumination type).

### (Optical section)

The optical section 5102 is designed to guide the light from the biological sample S to the signal acquisition section 5103. The optical section may be designed to enable the microscope device 5100 to observe or capture an image of the biological sample S.

The optical section 5102 may include an objective lens. The type of the objective lens may be appropriately selected by a person skilled in the art, in accordance with the observation method. The optical section may also include a relay lens for relaying an image magnified by the objective lens to the signal acquisition section. The optical section may further include optical components other than the objective lens and the relay lens, and the optical components may be an eyepiece, a phase plate, a condenser lens, and the like.

The optical section 5102 may further include a wavelength separation unit designed to separate light having a predetermined wavelength from the light from the biological sample S. The wavelength separation unit may be designed to selectively cause light having a predetermined wavelength or a predetermined wavelength range to reach the signal acquisition section. The wavelength separation unit may include one or more of the following: a filter, a polarizing plate, a prism (Wollaston prism), and a diffraction grating that selectively pass light, for example. The optical component(s) included in the wavelength separation unit may be disposed in the optical path from the objective lens to the signal acquisition section, for example. The wavelength separation unit is provided in the microscope device in a case where fluorescent observation is performed, or particularly, where an excitation light irradiation section is included. The wavelength separation unit may be designed to separate fluorescence or white light from fluorescence.

### (Signal acquisition section)

The signal acquisition section 5103 may be designed to receive light from the biological sample S, and convert the light into an electrical signal, or particularly, into a digital electrical signal. The signal acquisition section may be designed to be capable of acquiring data about the biological sample S, on the basis of the electrical signal. The signal acquisition section may be designed to be capable of acquiring data of an image (a captured image, or particularly, a still image, a time-lapse image, or a moving image) of the biological sample S, or particularly, may be designed to acquire data of an image enlarged by the optical section. The signal acquisition section includes one or more image sensors, CMOSs, CCDs, or the like that include a plurality of pixels arranged in one- or two-dimensional manner. The signal acquisition section may include an image sensor for acquiring a low-resolution image and an image sensor for acquiring a high-resolution image, or may include an image sensor for sensing for AF or the like and an image sensor for outputting an image for observation or the like. The image sensor may include not only the plurality of pixels, but also a signal processing unit (including one or more of the following: a CPU, a DSP, and a memory) that performs signal processing using pixel signals from the respective pixels, and an output control section that controls outputting of image data generated from the pixel signals and processed data generated by the signal processing unit. The image sensor including the plurality of pixels, the signal processing unit, and the output control section can be preferably designed as a one-chip semiconductor device.

Note that the microscope system 5000 may further include an event detection sensor. The event detection sensor includes a pixel that photoelectrically converts incident light, and may be designed to detect that a change in the luminance of the pixel exceeds a predetermined threshold, and regard the change as an event. The event detection sensor may be of an asynchronous type.

### (Control section)

The control section 5110 controls imaging being performed by the microscope device 5100. For the imaging control, the control section can drive movement of the optical section 5102 and/or the sample placement section 5104, to adjust the positional relationship between the optical section and the sample placement section. The control section 5110 can move the optical section and/or the sample placement section in a direction toward or away from each other (in the optical axis direction of the objective lens, for example). The control section may also move the optical section and/or the sample placement section in any direction in a plane perpendicular to the optical axis direction. For the imaging control, the control section may control the light irradiation section 5101 and/or the signal acquisition section 5103.

### (Sample placement section)

The sample placement section 5104 may be designed to be capable of securing the position of a biological sample on the sample placement section, and may be a so-called stage. The sample placement section 5104 may be designed to be capable of moving the position of the biological sample in the optical axis direction of the objective lens and/or in a direction perpendicular to the optical axis direction.

### (Information processing section)

The information processing section 5120 can acquire, from the microscope device 5100, data (imaging data or the like) acquired by the microscope device 5100. The information processing section can perform image processing on the imaging data. The image processing may include an unmixing process, or more specifically, a spectral unmixing process. The unmixing process may include a process of extracting data of the optical component of a predetermined wavelength or in a predetermined wavelength range from the imaging data to generate image data, or a process of removing data of the optical component of a predetermined wavelength or in a predetermined wavelength range from the imaging data. The image processing may also include an autofluorescence separation process for separating the autofluorescence component and the dye component of a tissue section, and a fluorescence separation process for separating wavelengths between dyes having different fluorescence wavelengths from each other. The autofluorescence separation process may include a process of removing the autofluorescence component from image information about another specimen, using an autofluorescence signal extracted from one specimen of the plurality of specimens having the same or similar properties.

The information processing section 5120 may transmit data for the imaging control to the control section 5110, and the control section 5110 that has received the data may control the imaging being by the microscope device 5100 in accordance with the data.

The information processing section 5120 may be designed as an information processing device such as a general-purpose computer, and may include a CPU, RAM, and ROM. The information processing section may be included in the housing of the microscope device 5100, or may be located outside the housing. Further, the various processes or functions to be executed by the information processing section may be realized by a server computer or a cloud connected via a network.

### (Optical System)

A configuration example of a microscope system including the optical system of the present technology is illustrated in Fig. 13. A microscope system 5000 illustrated in Fig. 13 includes an optical system 5105 according to the present technology in addition to the configuration of the microscope system illustrated in Fig. 12. Note that the optical system 5105 may be integrally incorporated into the microscope system 5000 as a finished product, or may be incorporated as an external optional part. Furthermore, as elements constituting the optical system of the present technology, such as the condensing optical system, the light source, and the detection section, elements such as the optical section 5102, the light irradiation section 5101, and the signal acquisition section 5103 of the microscope system 5000 can also be used.

The method to be implemented by the microscope device 5100 to capture an image of the biological sample S may be appropriately selected by a person skilled in the art, in accordance with the type of the biological sample, the purpose of imaging, and the like. Examples of the imaging method are described below.

One example of the imaging method is as follows. The microscope device can first identify an imaging target region. The imaging target region may be identified so as to cover the entire region in which the biological sample exists, or may be identified so as to cover the target portion (the portion in which the target tissue section, the target cell, or the target lesion exists) of the biological sample. Next, the microscope device divides the imaging target region into a plurality of divided regions of a predetermined size, and the microscope device sequentially captures images of the respective divided regions. As a result, an image of each divided region is acquired.

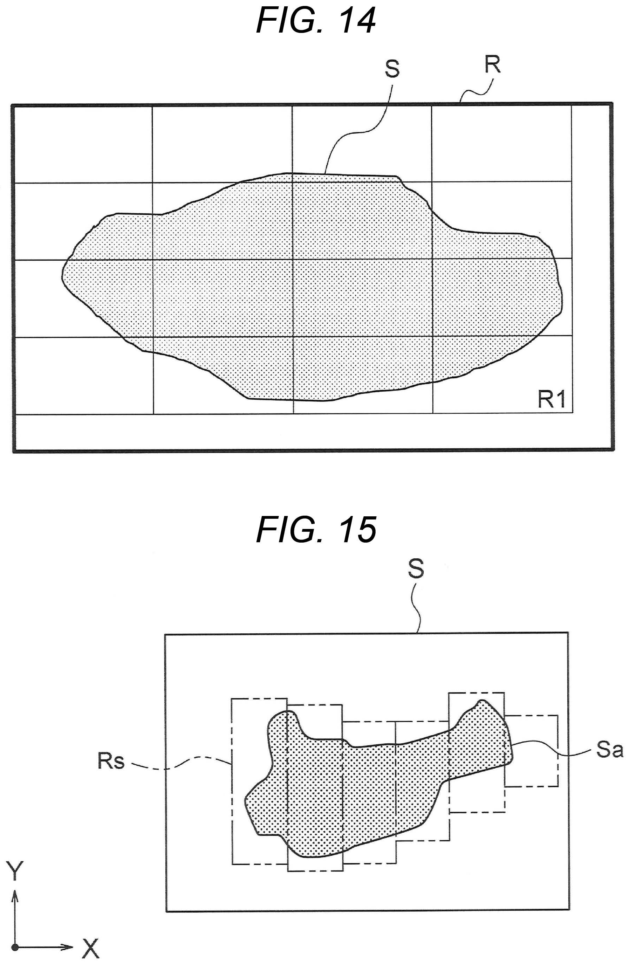

As illustrated in Fig. 14, the microscope device specifies an imaging target region R covering the entire biological sample S. The microscope device then divides the imaging target region R into 16 divided regions. The microscope device then captures an image of a divided region R1, and next captures one of the regions included in the imaging target region R, such as an image of a region adjacent to the divided region R1. After that, divided region imaging is performed until images of all the divided regions have been captured. Note that an image of a region other than the imaging target region R may also be captured on the basis of captured image information about the divided regions.

The positional relationship between the microscope device and the sample placement section is adjusted so that an image of the next divided region is captured after one divided region is captured. The adjustment may be performed by moving the microscope device, moving the sample placement section, or moving both. In this example, the imaging device that captures an image of each divided region may be a two-dimensional image sensor (an area sensor) or a one-dimensional image sensor (a line sensor). The signal acquisition section may capture an image of each divided region via the optical section. Further, images of the respective divided regions may be continuously captured while the microscope device and/or the sample placement section is moved, or movement of the microscope device and/or the sample placement section may be stopped every time an image of a divided region is captured. The imaging target region may be divided so that the respective divided regions partially overlap, or the imaging target region may be divided so that the respective divided regions do not overlap. A plurality of images of each divided region may be captured while the imaging conditions such as the focal length and/or the exposure time are changed.

The information processing device can also generate image data of a wider region by stitching a plurality of adjacent divided regions. As the stitching process is performed on the entire imaging target region, an image of a wider region can be acquired with respect to the imaging target region. Also, image data with a lower resolution can be generated from the images of the divided regions or the images subjected to the stitching process.

Another example of the imaging method is as follows. The microscope device can first identify an imaging target region. The imaging target region may be identified so as to cover the entire region in which the biological sample exists, or may be identified so as to cover the target portion (the portion in which the target tissue section or the target cell exists) of the biological sample. Next, the microscope device scans a region (also referred to as a "divided scan region") of the imaging target region in one direction (also referred to as a "scan direction") in a plane perpendicular to the optical axis, and thus captures an image. After the scanning of the divided scan region is completed, the divided scan region next to the scan region is then scanned. These scanning operations are repeated until an image of the entire imaging target region is captured.

As illustrated in Fig. 15, the microscope device specifies, as an imaging target region Sa, a region (gray portion) where a tissue section exists in the biological sample S. The microscope device then scans a divided scan region Rs of the imaging target region Sa in the Y-axis direction. After completing the scanning of the divided scan region Rs, the microscope device then scans the divided scan region that is the next in the X-axis direction. This operation is repeated until scanning of the entire imaging target region Sa is completed.

For the scanning of each divided scan region, the positional relationship between the microscope device and the sample placement section is adjusted so that an image of the next divided scan region is captured after an image of one divided scan region is captured. The adjustment may be performed by moving the microscope device, moving the sample placement section, or moving both. In this example, the imaging device that captures an image of each divided scan region may be a one-dimensional image sensor (a line sensor) or a two-dimensional image sensor (an area sensor). The signal acquisition section may capture an image of each divided region via a magnifying optical system. Also, images of the respective divided scan regions may be continuously captured while the microscope device and/or the sample placement section is moved. The imaging target region may be divided so that the respective divided scan regions partially overlap, or the imaging target region may be divided so that the respective divided scan regions do not overlap. A plurality of images of each divided scan region may be captured while the imaging conditions such as the focal length and/or the exposure time are changed.

The information processing device can also generate image data of a wider region by stitching a plurality of adjacent divided scan regions. As the stitching process is performed on the entire imaging target region, an image of a wider region can be acquired with respect to the imaging target region. Also, image data with a lower resolution can be generated from the images of the divided scan regions or the images subjected to the stitching process.

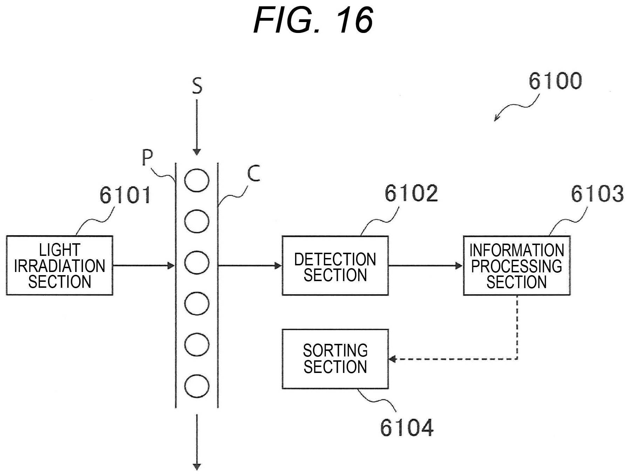

A microparticle analyzer for a biological sample, which can include the optical system according to the present technology, and an example in which the optical system according to the present technology is used in the microparticle analyzer will be described more specifically with reference to Fig. 16. Note that, in the optical system of the present technology, the configuration of the microparticle analyzer having a function overlapping with the configuration of the optical system of the present technology can also be suitably used as the configuration of the optical system of the present technology.

Fig. 16 illustrates a configuration example of a biological sample analyzer of the present disclosure. A biological sample analyzer 6100 illustrated in Fig. 16 includes: a light irradiation section 6101 that irradiates a biological sample S flowing in a flow channel C with light; a detection section 6102 that detects light generated by irradiating the biological sample S with light; and an information processing section 6103 that processes information regarding the light detected by the detection section. The biological sample analyzer 6100 is a flow cytometer or an imaging cytometer, for example. The biological sample analyzer 6100 may include a sorting section 6104 that sorts out specific biological particles P in a biological sample. The biological sample analyzer 6100 including the sorting section is a cell sorter, for example.

### (Biological Sample)

The biological sample S may be a liquid sample containing biological particles. The biological particles are cells or non-cellular biological particles, for example. The cells may be living cells, and more specific examples thereof include blood cells such as erythrocytes and leukocytes, and germ cells such as sperms and fertilized eggs. Also, the cells may be those directly collected from a sample such as whole blood, or may be cultured cells obtained after culturing. The non-cellular biological particles are extracellular vesicles, or particularly, exosomes and microvesicles, for example. The biological particles may be labeled with one or more labeling substances (such as a dye (particularly, a fluorescent dye) and a fluorochrome-labeled antibody). Note that particles other than biological particles may be analyzed by the biological sample analyzer of the present disclosure, and beads or the like may be analyzed for calibration or the like.

### (Flow Channel)

The flow channel C is designed so that a flow of the biological sample S is formed. In particular, the flow channel C may be designed so that a flow in which the biological particles contained in the biological sample are aligned substantially in one row is formed. The flow channel structure including the flow channel C may be designed so that a laminar flow is formed. In particular, the flow channel structure is designed so that a laminar flow in which the flow of the biological sample (a sample flow) is surrounded by the flow of a sheath liquid is formed. The design of the flow channel structure may be appropriately selected by a person skilled in the art, or a known one may be adopted. The flow channel C may be formed in a flow channel structure such as a microchip (a chip having a flow channel on the order of micrometers) or a flow cell. The width of the flow channel C is 1 mm or smaller, or particularly, may be not smaller than 10 µm and not greater than 1 mm. The flow channel C and the flow channel structure including the flow channel C may be made of a material such as plastic or glass.

The biological sample analyzer of the present disclosure is designed so that the biological sample flowing in the flow channel C, or particularly, the biological particles in the biological sample are irradiated with light from the light irradiation section 6101. The biological sample analyzer of the present disclosure may be designed so that the irradiation point of light on the biological sample is located in the flow channel structure in which the flow channel C is formed, or may be designed so that the irradiation point is located outside the flow channel structure. An example of the former case may be a configuration in which the light is emitted onto the flow channel C in a microchip or a flow cell. In the latter case, the biological particles after exiting the flow channel structure (particularly, the nozzle portion thereof) may be irradiated with the light, and a flow cytometer of a jet-in-air type can be adopted, for example.

### (Light irradiation section)

The light irradiation section 6101 includes a light source unit that emits light, and a light guide optical system that guides the light to the irradiation point. The light source unit includes one or more light sources. The type of the light source(s) is a laser light source or an LED, for example. The wavelength of light to be emitted from each light source may be any wavelength of ultraviolet light, visible light, and infrared light. The light guide optical system includes optical components such as beam splitters, mirrors, or optical fibers, for example. The light guide optical system may also include a lens group for condensing light, and includes an objective lens, for example. There may be one or more irradiation points at which the biological sample and light intersect. The light irradiation section 6101 may be designed to collect light emitted onto one irradiation point from one light source or different light sources.

### (Detection section)

The detection section 6102 includes at least one photodetector that detects light generated by emitting light onto biological particles. The light to be detected may be fluorescence or scattered light (such as one or more of the following: forward scattered light, backscattered light, and side scattered light), for example. Each photodetector includes one or more light receiving elements, and has a light receiving element array, for example. Each photodetector may include one or more photomultiplier tubes (PMTs) and/or photodiodes such as APDs and MPPCs, as the light receiving elements. The photodetector includes a PMT array in which a plurality of PMTs is arranged in a one-dimensional direction, for example. The detection section 6102 may also include an image sensor such as a CCD or a CMOS. With the image sensor, the detection section 6102 can acquire an image (such as a bright-field image, a darkfield image, or a fluorescent image, for example) of biological particles.

The detection section 6102 includes a detection optical system that causes light of a predetermined detection wavelength to reach the corresponding photodetector. The detection optical system includes a spectroscopic unit such as a prism or a diffraction grating, or a wavelength separation unit such as a dichroic mirror or an optical filter. The detection optical system is designed to disperse the light generated by light irradiation to biological particles, for example, and detect the dispersed light with a larger number of photodetectors than the number of fluorescent dyes with which the biological particles are labeled. A flow cytometer including such a detection optical system is called a spectral flow cytometer. Further, the detection optical system is designed to separate the light corresponding to the fluorescence wavelength band of a specific fluorescent dye from the light generated by the light irradiation to the biological particles, for example, and cause the corresponding photodetector to detect the separated light.

The detection section 6102 may also include a signal processing unit that converts an electrical signal obtained by a photodetector into a digital signal. The signal processing unit may include an A/D converter as a device that performs the conversion. The digital signal obtained by the conversion performed by the signal processing unit can be transmitted to the information processing section 6103. The digital signal can be handled as data related to light (hereinafter, also referred to as "light data") by the information processing section 6103. The light data may be light data including fluorescence data, for example. More specifically, the light data may be data of light intensity, and the light intensity may be light intensity data of light including fluorescence (the light intensity data may include feature quantities such as area, height, and width).

### (Information processing section)

The information processing section 6103 includes a processing unit that performs processing of various kinds of data (light data, for example), and a storage unit that stores various kinds of data, for example. In a case where the processing unit acquires the light data corresponding to a fluorescent dye from the detection section 6102, the processing unit can perform fluorescence leakage correction (a compensation process) on the light intensity data. In the case of a spectral flow cytometer, the processing unit also performs a fluorescence separation process on the light data, and acquires the light intensity data corresponding to the fluorescent dye.

The fluorescence separation process may be performed by an unmixing method disclosed in Japanese Patent Application Laid-Open No. 2011-232259, for example. In a case where the detection section 6102 includes an image sensor, the processing unit may acquire morphological information about the biological particles, on the basis of an image acquired by the image sensor. The storage unit may be designed to be capable of storing the acquired light data. The storage unit may be designed to be capable of further storing spectral reference data to be used in the unmixing process.

In a case where the biological sample analyzer 6100 includes the sorting section 6104 described later, the information processing section 6103 can determine whether to sort the biological particles, on the basis of the light data and/or the morphological information. The information processing section 6103 then controls the sorting section 6104 on the basis of the result of the determination, and the biological particles can be sorted by the sorting section 6104.

The information processing section 6103 may be designed to be capable of outputting various kinds of data (such as light data and images, for example). For example, the information processing section 6103 can output various kinds of data (such as a two-dimensional plot or a spectrum plot, for example) generated on the basis of the light data. The information processing section 6103 may also be designed to be capable of accepting inputs of various kinds of data, and accepts a gating process on a plot by a user, for example. The information processing section 6103 may include an output unit (such as a display, for example) or an input unit (such as a keyboard, for example) for performing the output or the input.

The information processing section 6103 may be designed as a general-purpose computer, and may be designed as an information processing device that includes a CPU, a RAM, and a ROM, for example. The information processing section 6103 may be included in the housing in which the light irradiation section 6101 and the detection section 6102 are included, or may be located outside the housing. Further, the various processes or functions to be executed by the information processing section 6103 may be realized by a server computer or a cloud connected via a network.

### (Sorting section)

The sorting section 6104 performs sorting of biological particles, in accordance with the result of determination performed by the information processing section 6103. The sorting method may be a method by which droplets containing biological particles are generated by vibration, electric charges are applied to the droplets to be sorted, and the traveling direction of the droplets is controlled by an electrode. The sorting method may be a method for sorting by controlling the traveling direction of biological particles in the flow channel structure. The flow channel structure has a control mechanism based on pressure (injection or suction) or electric charge, for example. An example of the flow channel structure may be a chip (the chip disclosed in JP 2020-76736 A, for example) that has a flow channel structure in which the flow channel C branches into a recovery flow channel and a waste liquid flow channel on the downstream side, and specific biological particles are collected in the recovery flow channel.

### (Optical System)

In a case where the biological sample analyzer 6100 includes the optical system of the present technology, the optical system according to the present technology may be integrally incorporated into the biological sample analyzer 6100 as a finished product, or may be incorporated as an external optional component. Furthermore, elements such as the light irradiation section 6101 and the detection section 6102 of the biological sample analyzer 6100 can also be used as elements constituting the optical system of the present technology, such as the light source and the detection section.

### <Analysis Program>

As described above, the present technology can suitably measure an object to be measured in which a position of a sample to be measured is not substantially fixed, such as a sample injected into a cell, even in a compact configuration. Moreover, the object to be measured can be moved on a straight line not coinciding with the optical axis of the condensing optical system, and the object to be measured can be measured twice or more during the movement. The present technology can also construct an analysis program for constructing three-dimensional data of the object to be measured using the measurement data of the object to be measured acquired by the two or more measurements. By executing the analysis program of the present technology, three-dimensional imaging of the object to be measured can be suitably realized. Note that the analysis program of the present technology may be combined with any program as necessary according to the purpose of the analysis program as long as desired various physical properties are not significantly impaired.

Hereinafter, a specific embodiment of an optical element according to the present technology will be described with reference to the drawings. Note that the following embodiments are examples of embodiments of the present technology, and the present technology is not to be construed as being limited to the contents of these embodiments at all.

### <1 First Embodiment>

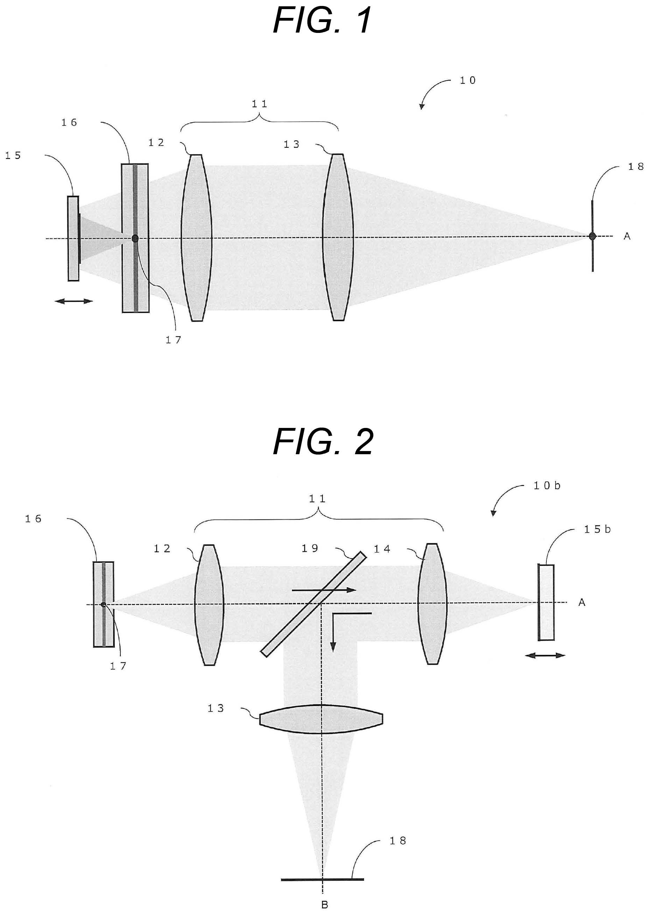

Fig. 1 illustrates a configuration example of an optical system according to a first embodiment. An optical system 10 according to the present embodiment includes a condensing optical system 11 including an objective lens 12 and an image forming lens 13, a reflection mirror unit including a reflection mirror 15, and a light source.

In the optical system 10, while an object to be measured 17 moving through a flow channel of a flow cell 16 including the flow channel for measurement moves through the flow channel of the flow cell 16, the light emitted from the light source to the object to be measured 17 travels along an optical axis A, is reflected by the reflection mirror 15, changes a traveling direction along the optical axis A to the opposite direction, and enters the objective lens 12 constituting the condensing optical system 11, and then is condensed at a position of an image forming plane 18 by the image forming lens 13 to form an image.

Here, since the reflection mirror unit including the reflection mirror 15 is disposed on the opposite side of the condensing optical system 11 across the object to be measured 17, the optical system 10 can have a compact configuration as compared with a case where the object to be measured is outside the optical system. Moreover, since the reflection mirror 15 is disposed on the opposite side of the condensing optical system 11 across the object to be measured 17, the reflection mirror 15 can be moved independently of the condensing optical system 11 by the position adjustment system included in the reflection mirror unit. Therefore, even with a compact configuration, the distance between the reflection mirror 15 and the object to be measured 17 moving in the flow channel of the flow cell 16 can be easily adjusted, the optical path length from the object to be measured 17 to the image forming plane 18 is changed to focus on the object to be measured 17, and the object to be measured 17 whose position is not substantially fixed can be suitably measured.

Although not particularly clearly illustrated in Fig. 1, the above-described detection section may be disposed at the position of the image forming plane 18. As the detection section that can be used in the first embodiment, the above-described detection section can be suitably adopted in accordance with the characteristics of the object to be measured and the purpose of measurement. Therefore, an image relating to the object to be measured 17 can be suitably detected and acquired as measurement data.

Fig. 2 illustrates a configuration example of an optical system according to the related art. In an optical system 10b, a condensing optical system 11 includes an intermediate lens 14 and a half mirror 19 in addition to an objective lens 12 and an image forming lens 13, and optical elements are arranged in tandem. In the optical system 10b, in the object plane from the light source, light emitted from a light source to an object to be measured 17 is incident on the objective lens 12 along an optical axis A, then passes through the half mirror 19, is condensed by the intermediate lens 14, and forms an intermediate image (primary image forming plane). In the optical system 10b, a reflection mirror 15b is disposed on an image forming plane of the intermediate image, and the reflection mirror 15b reflects light obtained by forming the intermediate image, changes a traveling direction to a reverse direction along the optical axis A, and causes the light to enter the half mirror 19. The traveling direction of the light incident on the half mirror 19 is changed to an optical axis B, and the light is condensed at a position of an image forming plane 18 by the image forming lens 13 to form an image.

In the optical system 10b, the reflection mirror 15b is moved along the optical axis A to focus on the intermediate image. For this reason, because the object to be measured 17 needs to be disposed outside the optical system 10b due to the structure of the optical system, the optical system does not have a compact configuration.

Although not specifically expressed in Fig. 1, the moving width when the reflection mirror 15 is moved along the optical axis A is preferably set to be the same as the inner dimension of the flow channel of the flow cell 16 along the optical axis direction. Furthermore, by making the movement of the reflection mirror 15 along the optical axis by the position adjustment system a periodic movement, the object to be measured 17 moving on the flow channel of the flow cell 16 is automatically focused at any position on the movement path of the periodic movement. Therefore, autofocus can be suitably realized.

Moreover, although not specifically expressed in Fig. 1, as a method of irradiating the object to be measured with light from the light source that can be used in the first embodiment, the above-described method can be suitably adopted in accordance with the characteristics of the object to be measured and the purpose of measurement.

Note that Fig. 1 illustrates an example in which a system including an objective lens and an image forming lens is adopted as the condensing optical system, but the condensing optical system is not limited thereto. Also in the first embodiment, a system including one lens, a system in which three or more lenses having one or more intermediate lenses in addition to the objective lens and the image forming lens are combined, or the like can be suitably adopted according to the characteristics of the object to be measured and the purpose of measurement.

In the embodiment illustrated in Fig. 1, an example of a sample moving in a flow cell including a flow channel for measurement is shown as the object to be measured, but the object to be measured is not limited thereto, and the object to be measured whose position is not substantially fixed can be suitably focused. Furthermore, the optical system of the present embodiment can suitably measure any object to be measured having a light transmittance higher than 0%.

### <2 Second Embodiment>

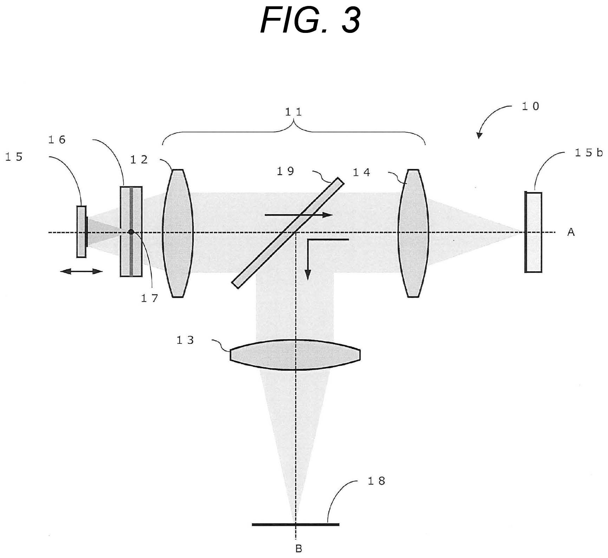

Fig. 3 illustrates a configuration example of an optical system according to a second embodiment. An optical system 10 according to the present embodiment is a configuration example in a case where the present technology is applied to the optical system illustrated in Fig. 2 described above.

That is, in the optical system 10 according to the present embodiment, as illustrated in Fig. 3, a reflection mirror unit including a reflection mirror 15 is disposed on the opposite side of the condensing optical system 11 across the object to be measured 17. Therefore, similarly to the first embodiment, by moving the reflection mirror 15 along an optical axis A, a distance between the reflection mirror 15 and the object to be measured 17 moving in the flow channel of a flow cell 16 can be easily adjusted, an optical path length from the object to be measured 17 to an image forming plane 18 is changed to focus on the object to be measured 17, and the object to be measured 17 whose position is not substantially fixed can be suitably measured.

Furthermore, in the optical system 10 according to the present embodiment, similarly to the first embodiment, the reflection mirror 15 disposed on the opposite side of the condensing optical system 11 across the object to be measured 17 can be moved independently of the condensing optical system 11 by the position adjustment system included in the reflection mirror unit. Therefore, the optical system 10 can adjust the distance between the reflection mirror 15 and the object to be measured 17, and can suitably focus on the object to be measured 17. Since it is possible to focus on the object to be measured 17 by the movement of the reflection mirror 15, it is not necessary to move a reflection mirror 15c disposed on the image forming plane of the intermediate image in the present embodiment.

Moreover, the optical system 10 according to the present embodiment can have a compact configuration as compared with a case where the object to be measured is outside the optical system as in the example of the optical system illustrated in Fig. 2 by adopting the above arrangement. On the other hand, even with the compact configuration, a distance between the reflection mirror 15 and the object to be measured 17 moving in the flow channel of the flow cell 16 can be easily adjusted, an optical path length from the object to be measured 17 to the image forming plane 18 is changed to focus on the object to be measured 17, and the object to be measured 17 whose position is not substantially fixed can be suitably measured.

Also in the optical system according to the present embodiment, the configuration is not limited to the combination of the configuration examples illustrated in Fig. 3, and as long as desired various physical properties are not significantly impaired, changes or configurations may be added to configurations similar to those illustrated in the optical system according to the first embodiment as necessary.

### <3 Form of Periodic Movement of Reflection Mirror>

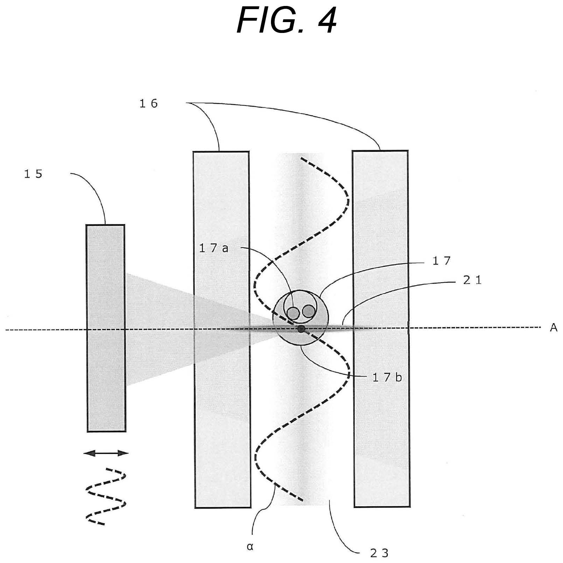

Fig. 4 is an enlarged view of the vicinity of the object to be measured of a microparticle analyzer including the optical system according to the present technology, and is an example in a case where a reflection mirror is periodically moved in a sinusoidal shape.

In the optical system 10, any method can be adopted as a periodic moving means of the reflection mirror 15 as long as the method can realize the sinusoidal movement. For example, it can be suitably realized by combining an AC motor and a control system.

A path α in Fig. 4 illustrates an image in which a focal point of the optical system 10 moves along the flow of a flow channel 23 of the flow cell 16 in a case where the reflection mirror 15 moves sinusoidally by an arbitrary method. (In Fig. 4, the focal point movement path α is used.) When the object to be measured 17 moves along the flow channel 23 of the flow cell 16 and intersects with the focal point movement path α, the focal point of the optical system 10 is aligned with the object to be measured 17.

In the object to be measured 17 illustrated in Fig. 4, gel particles 17b contain two cells 17a. As described above, the optical system 10 can focus on any position of the object to be measured 17 by moving the reflection mirror 15. Therefore, even if the two cells 17a illustrated in Fig. 4 overlap each other in an optical axis direction, the cells 17a can be suitably observed.

Note that Fig. 4 illustrates an example of cells contained in the gel particles as the object to be measured, but the object to be measured is not limited thereto, and any object to be measured, such as a single cell or the object to be measured exemplified herein, can be suitably measured as long as it is a sample that can move through the flow cell.

Furthermore, as illustrated in Fig. 4, the moving width of the periodic movement of the reflection mirror 15 in this case is set to be the same as an inner dimension of the flow cell 16 in the optical axis direction, so that it is possible to efficiently focus on the object to be measured 17 in the flow cell 16. Note that here, the inner dimension in the optical axis direction is an inner dimension along the optical axis direction as described above. In the example of Fig. 4, since the flow channel of the flow cell 16 is disposed in a direction perpendicular to the optical axis A, the inner dimension along the optical axis direction coincides with the inner dimension of the cross section of the flow channel. On the other hand, if the flow cell 16 is disposed so as to be inclined to the optical axis A instead of being perpendicular to the optical axis A, the inner dimension along the optical axis direction is larger than the inner dimension of the cross section of the flow channel.

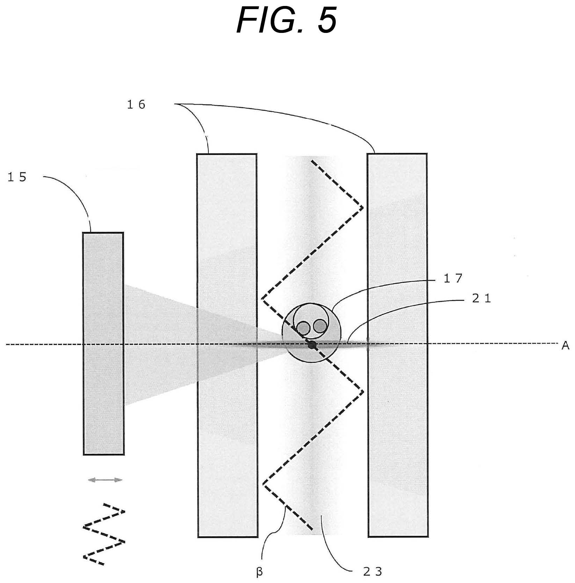

Fig. 5 is an enlarged view of the vicinity of an object to be measured of a microparticle sorting device including the optical system according to the present technology, and is an example of a case where a reflection mirror is periodically moved in a triangular wave shape.

Also in this optical system 10, any method can be adopted as a periodic moving means of the reflection mirror 15 as long as the method can realize the triangular wave movement. For example, it can be suitably realized by combining an AC motor and a control system.

A path β in Fig. 5 illustrates an image in which a focal point of the optical system 10 moves along the flow of the flow channel 23 of the flow cell 16 in a case where the reflection mirror 15 moves in a triangular wave shape by an arbitrary method. (In Fig. 5, the focal point movement path β is used.) Also in this case, similarly to the example illustrated in Fig. 4, when the object to be measured 17 moves along the flow channel 23 of the flow cell 16 and intersects with the focal point movement path β, the focal point of the optical system 10 matches the object to be measured 17. Moreover, also in the present embodiment, similarly to the example illustrated in Fig. 4, the moving width of the periodic movement of the reflection mirror 15 is set to be the same as the inner dimension of the flow cell 16 in the optical axis direction, so that it is possible to efficiently focus on the object to be measured 17 in the flow cell 16.

In the examples illustrated in Figs. 4 and 5, an example of a sample moving in a flow cell including a flow channel for measurement is shown as the object to be measured, but any form is not limited thereto, and the object to be measured whose position is not substantially fixed can be suitably focused.

Moreover, in the examples illustrated in Figs. 4 and 5, the sinusoidal shape and the triangular shape are illustrated as the moving shape of the periodic movement of the reflection mirror, but the moving shape is not limited to these shapes, and any shape can be adopted in accordance with the characteristics of the object to be measured and the purpose of measurement.

### <4 Form of Light Source>

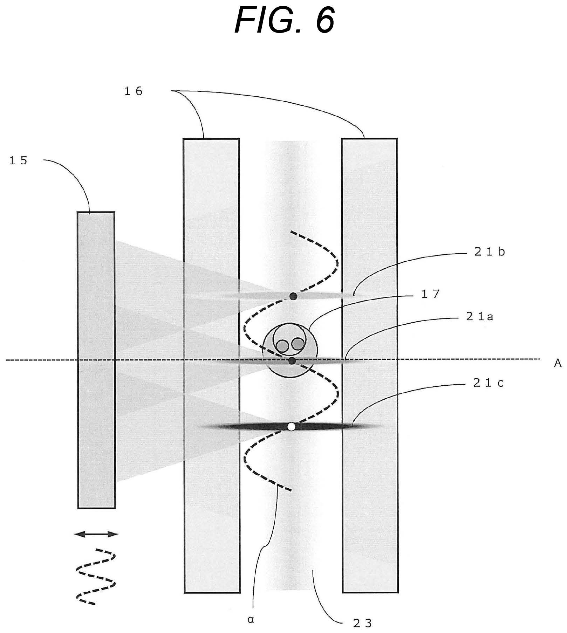

Fig. 6 illustrates an example of an optical system including two or more light sources. The optical system illustrated in Fig. 6 includes three light sources that emit light of different wavelengths, and light derived from the three light sources is emitted to irradiation points 21a, 21b, and 21c of light from the respective light sources. By providing a plurality of light sources that emit light of different wavelengths, multicolor imaging in which two or more components and structures constituting the object to be measured are observed in different colors, and characteristics of light absorption and light scattering of the object to be measured are analyzed for each wavelength, and evaluation of the composition, structure, and chemical characteristics of the object to be measured can be suitably realized.

In this case, the light source to be used is not particularly limited as long as it can irradiate the object to be measured with light, and for example, any light source described in the present specification can be selected in accordance with the characteristics of the object to be measured and the purpose of measurement.

Note that, although not clearly illustrated in the drawing, in the optical system illustrated in Fig. 6, the wavelengths of the three light sources that emit light of different wavelengths can be suitably adjusted to the fluorescent dye excitation light used for observation of the sample.

Furthermore, in the example illustrated in Fig. 6, in order to easily illustrate that the optical system 10 includes three light sources, three irradiation points of light from the respective light sources are described in accordance with the number of light sources. However, as described above, from the viewpoint of multicolor imaging in which two or more components and structures constituting the object to be measured are observed in different colors and analyzing characteristics of light absorption and light scattering of the object to be measured for each wavelength, it is preferable that the light from the three light sources is irradiated with the light focused on the same focal point, and the irradiation points of the light from the respective light sources coincide with each other.

Moreover, in the example illustrated in Fig. 6, the sinusoidal shape is illustrated as the moving shape of the periodic movement of the reflection mirror, but the moving shape is not limited to these shapes, and any shape can be adopted in accordance with the characteristics of the object to be measured and the purpose of measurement. Moreover, although Fig. 6 illustrates an example in which three light sources are provided, the number of light sources and wavelengths to be used can be appropriately selected in accordance with components and structures constituting the object to be measured. Note that, from the viewpoint of reducing the size of the optical system, Fig. 6 illustrates an example in which even in a case where a plurality of light sources is provided, one reflection mirror is provided, but the number of reflection mirrors is not limited to one, and the number of reflection mirrors may be plural in accordance with the component and structure of the object to be measured.

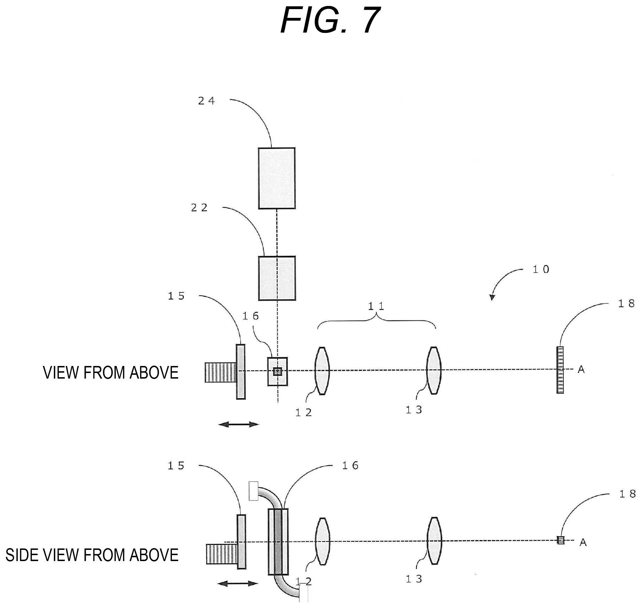

Fig. 7 is an example of a method of irradiating the object to be measured with light from the light source in the optical system according to the present technology, and is an example of directly irradiating the object to be measured with light from a direction different from the optical axis. Specifically, in the optical system 10 illustrated in Fig. 7, the flow cell 16 is directly irradiated with light from the light source 24 in a direction different from the optical axis A, thereby irradiating the object to be measured 17 existing in the flow channel of the flow cell 16 with light.

In this case, although not clearly illustrated in the drawing, the measurement of the object to be measured 17 can be suitably performed by selectively irradiating the region of the focal point of the optical system of the flow channel of the flow cell 16 with light (narrow light distribution) using the light source as the line illumination.

This optical system 10 includes a beam shaping system 22. The beam shaping system 22 combines arbitrary optical elements such as a lens and an optical filter to adjust the condensing degree and the shape of the light output from the light source 24. Therefore, the light applied to the object to be measured can be controlled in accordance with the characteristics of the object to be measured and the purpose of measurement.

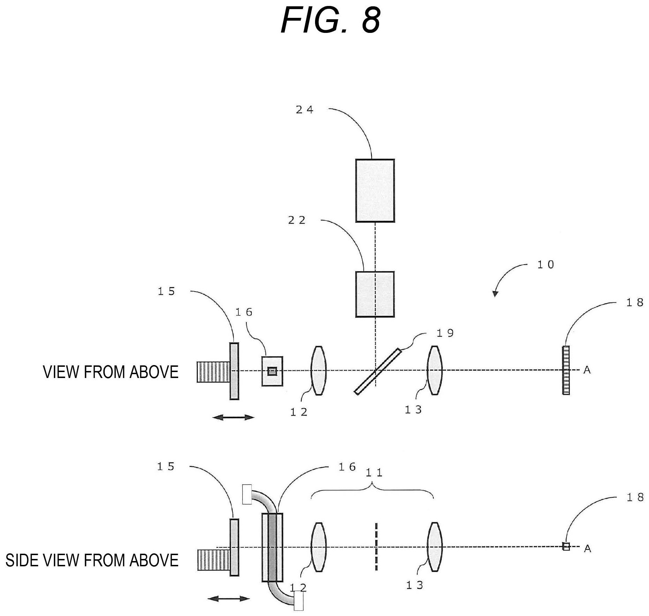

Fig. 8 illustrates a modification of the method of irradiating the object to be measured with light from the light source in the optical system according to the present technology, and illustrates an example of indirectly irradiating the object to be measured with light from a direction different from the optical axis using a beam splitter. Specifically, in the optical system 10 illustrated in Fig. 8, the half mirror 19 as a beam splitter is irradiated with light from the light source 24 in a direction different from the optical axis A. The light is reflected by the half mirror, travels along the direction of the optical axis A, and irradiates the object to be measured 17 existing in the flow channel of the flow cell 16 with light.

Also in the example illustrated in Fig. 8, similarly to the example of Fig. 7, although not clearly illustrated in the drawing, the measurement of the object to be measured 17 can be suitably performed by selectively irradiating the region of the focal point of the optical system of the flow channel of the flow cell 16 with light (narrow light distribution) using the light source as the line illumination.

The optical system according to Fig. 8 also includes the beam shaping system 22, and the beam shaping system 22 can control light applied to the object to be measured by combining arbitrary optical elements such as a lens and an optical filter according to the characteristics of the object to be measured and the purpose of measurement, similarly to the example of the optical system of Fig. 7.

In the examples illustrated in Figs. 7 and 8, an example of a sample moving in a flow cell having a flow channel for measurement is illustrated as the object to be measured, but the present technology is not limited thereto, and the object to be measured that can be measured by the present technology can be adopted in any example.

Moreover, in the examples illustrated in Figs. 7 and 8, a method of directly irradiating the object to be measured with light from a direction different from the optical axis and a method of indirectly irradiating the object to be measured with light from a direction different from the optical axis using a beam splitter or the like are illustrated. However, the light irradiation method is not limited to these methods, and a method of irradiating the object to be measured with light from the direction of the reflection mirror unit along the optical axis in accordance with the characteristics of the object to be measured and the purpose of measurement can also be adopted.

### <5 Embodiment Of Changing Optical Path Length From Light Source To Irradiation Point>

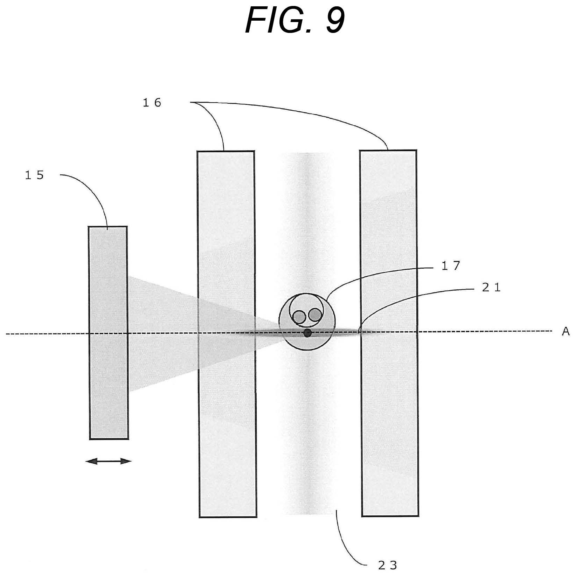

Next, an example of an embodiment in which the optical path length from the light source to the irradiation point is changed in the optical system of the present technology will be described with reference to Fig. 9.

This optical system 10 can move the reflection mirror 15 independently of the light source as illustrated in Fig. 9. Therefore, the optical path length from the light source to the irradiation point is changed, the position of the irradiation point 21 where the light incident on the reflection mirror from the light source is condensed can be easily adjusted, and the object to be measured 17 and the irradiation point 21 can be matched with each other. Therefore, even in a case where the object to be measured 17 moves along the flow channel 23 of the flow cell 16, the irradiation point 21 can be aligned with the object to be measured 17.

Furthermore, for the moving width of the periodic movement of the reflection mirror 15 in this case, conditions similar to those in the case illustrated in the example of the form of the periodic movement of the reflection mirror illustrated in Fig. 4 and the like can be applied, whereby the irradiation point can be suitably adjusted to the object to be measured illustrated in Fig. 4 and the like.

Note that the present technology can have the following configurations.
(1) An optical system including:
   a condensing optical system; and
   a reflection mirror unit,
   in which the condensing optical system and the reflection mirror unit are disposed on opposite sides across an object to be measured, and
   the reflection mirror unit includes a reflection mirror and a position adjustment system that adjusts a distance between the reflection mirror and the object to be measured by moving the reflection mirror.
(2) An optical system including:
   a condensing optical system;
   a reflection mirror unit; and
   a light source that irradiates an object to be measured with light,
   in which the condensing optical system and the reflection mirror unit are disposed on opposite sides across the object to be measured, and
   the reflection mirror unit includes a reflection mirror and a position adjustment system that adjusts a distance between the reflection mirror and the light source by moving the reflection mirror.
(3) The optical system according to (1) or (2), in which movement of the reflection mirror by the position adjustment system is performed by converting an electric signal into a physical movement.
(4) The optical system according to (1) or (3), further including a light source that irradiates the object to be measured with light.
(5) The optical system according to any one of (1) to (4), further including a detection section.
(6) The optical system according to any one of (1) to (5), in which the condensing optical system includes at least an objective lens and an image forming lens.
(7) The optical system according to any one of (1) to (6), in which the object to be measured has a light transmittance of not 0%.
(8) The optical system according to any one of (2) to (7), including two or more of the light sources. (9) The optical system according to (8), in which the two or more light sources emit light of different wavelengths.
(10) The optical system according to any one of (1) to (9), in which the object to be measured is a sample injected into a cell.
(11) The optical system according to (10), in which the cell includes a flow cell including a flow channel for measurement.
(12) The optical system according to (10), in which the cell includes a microscope slide.
(13) The optical system according to any one of (10) to (12), in which an optical path length from the condensing optical system to the object to be measured is configured to periodically vary by making a movement of the reflection mirror by the position adjustment system a periodic movement.
(14) The optical system according to (13), in which a moving width of the periodic movement is the same as an inner dimension of the cell in an optical axis direction.
(15) The optical system according to any one of (1) to (14), in which the optical system is for observing a biological sample.
(16) A measurement device including the optical system according to any one of (1) to (15).
(17) A measurement method for an object to be measured, the measurement method including:
   using a condensing optical system and
   a reflection mirror unit including a reflection mirror and a position adjustment system,
   disposing the condensing optical system and the reflection mirror unit on opposite sides across the object to be measured, and
   adjusting a distance between the reflection mirror and the object to be measured using the position adjustment system.
(18) The measurement method according to (17), further including a light source that irradiates the object to be measured with light.
(19) A measurement method for an object to be measured, including:
   using a condensing optical system;
   a reflection mirror unit including a reflection mirror and a position adjustment system; and
   a light source that irradiates the object to be measured with light,
   disposing the condensing optical system and the reflection mirror unit on opposite sides across the object to be measured, and
   adjusting a distance between the reflection mirror and the light source using the position adjustment system.
(20) The measurement method according to any one of (17) to (19), in which the object to be measured is moved on a straight line not coinciding with an optical axis of the condensing optical system and is measured twice or more.
(21) The measurement method according to (20), in which the straight line is orthogonal to an optical axis of the condensing optical system. (22) An analysis program for, using measurement data acquired by the measurement method according to (20) or (21), constructing three-dimensional data of the object to be measured.

### REFERENCE SIGNS LIST

10, 10b, 110 Optical system
11, 111 Condensing optical system
12, 112 Objective lens
13, 113 Image forming lens
14 Intermediate lens
120 Reflection mirror unit
15, 15b, 15c, 115 Reflection mirror
116 Position adjustment system
118 Detection section
16 Flow cell
17, 117 Object to be measured
17a Cell
17b Gel particle
18 Image forming plane
19 Half mirror
20 Microparticle sorting device
21, 21a, 21b, 21c Irradiation point of light from light source
22 Beam shaping system
23 Flow channel
24, 124 Light source
A, B Optical axis
α, β Focal point movement path

## Claims

1. An optical system for observing a biological sample, the optical system comprising:
a condensing optical system; and
a reflection mirror unit,
wherein the condensing optical system and the reflection mirror unit are disposed on opposite sides across an object to be measured, and
the reflection mirror unit includes a reflection mirror and a position adjustment system that adjusts a distance between the reflection mirror and the object to be measured by moving the reflection mirror.

2. The optical system for observing a biological sample according to claim 1, wherein movement of the reflection mirror by the position adjustment system is performed by converting an electric signal into a physical motion.

3. The optical system for observing a biological sample according to claim 1, further comprising a light source that irradiates the object to be measured with light.

4. The optical system for observing a biological sample according to claim 1, further comprising a detection section.

5. The optical system for observing a biological sample according to claim 1, wherein the condensing optical system includes at least an objective lens and an image forming lens.

6. The optical system for observing a biological sample according to claim 1, wherein the object to be measured has a light transmittance of not 0%.

7. The optical system for observing a biological sample according to claim 3, comprising two or more of the light sources.

8. The optical system for observing a biological sample according to claim 7, wherein the two or more light sources emit light of different wavelengths.

9. The optical system for observing a biological sample according to claim 1, wherein the object to be measured includes a sample injected into a cell.

10. The optical system for observing a biological sample according to claim 9, wherein the cell includes a flow cell including a flow channel for measurement.

11. The optical system for observing a biological sample according to claim 9, wherein the cell includes a microscope slide.

12. The optical system for observing a biological sample according to claim 9, wherein an optical path length from the condensing optical system to the object to be measured is configured to periodically vary by making a movement of the reflection mirror by the position adjustment system a periodic movement.

13. The optical system for observing a biological sample according to claim 12, wherein a moving width of the periodic movement is a same as an inner dimension of the cell in an optical axis direction.

14. A measurement device comprising the optical system for observing a biological sample according to claim **1.**

15. A measurement method for an object to be measured, the measurement method comprising:
using a condensing optical system and
a reflection mirror unit including a reflection mirror and a position adjustment system;
disposing the condensing optical system and the reflection mirror unit on opposite sides across the object to be measured; and
adjusting a distance between the reflection mirror and the object to be measured using the position adjustment system.

16. The measurement method according to claim 15, wherein the object to be measured is moved on a straight line not coinciding with an optical axis of the condensing optical system, and is measured twice or more.

17. The measurement method according to claim 16, wherein the straight line is orthogonal to an optical axis of the condensing optical system.

18. An analysis program for, using measurement data acquired by the measurement method according to claim 16, constructing three-dimensional data of the object to be measured.
